# EUROPEAN PATENT APPLICATION

(11) **EP 4 485 631 A1**
(43) Date of publication of application: **01.01.2025**
(21) Application number: 24164090.3
(22) Date of filing: 18.03.2024
(51) Int. Cl.: H01M 50/103, H01M 50/342, H01M 50/55

(54) **SECONDARY BATTERY**

(30) Priority: 28.06.2023 KR 20230083296
(71) Applicant: Samsung SDI Co., Ltd., Yongin-si, Gyeonggi-do 17084 (KR)
(72) Inventor: Roh, Heyoung Cheoul, 17084 Yongin-si, Gyeonggi-do (KR); Yong, Jun Sun, 17084 Yongin-si, Gyeonggi-do (KR); Lee, Jun Hyung, 17084 Yongin-si, Gyeonggi-do (KR); Bae, Kwang Soo, 17084 Yongin-si, Gyeonggi-do (KR); Kim, Ji Hwan, 17084 Yongin-si, Gyeonggi-do (KR); Bae, Chae Eun, 17084 Yongin-si, Gyeonggi-do (KR)
(74) Representative: Gulde & Partner

(57) **Abstract**

A secondary battery (100) includes: an electrode assembly (110) including a first electrode tab (111a) and a second electrode tab (112a) at a top portion; a first terminal (130) electrically connected to the first electrode tab (111a) of the electrode assembly (110); a case (160) accommodating the electrode assembly (110) and a portion of the first terminal (130) and including a safety vent (165) at a bottom portion; a side retainer (161) between a side of the case (160) and a side of the electrode assembly (110); and a cap plate (171) sealing a top opening of the case (160), and the side retainer (161) includes a gas movement passage (1613, 1623) extending in a third direction (z), which is a longitudinal direction of the case (160).

## Description

### BACKGROUND

### 1. Field

Aspects of embodiments of the present disclosure relate to a secondary battery.

### 2. Description of the Related Art

A secondary battery is a power storage system that provides excellent energy density capable of converting electrical energy into chemical energy and storing the same. Compared to non-rechargeable primary batteries, secondary batteries are rechargeable and are widely used in IT devices, such as smartphones, cellular phones, notebooks, and tablet PCs. Recently, interest in electric vehicles has increased to prevent or reduce environmental pollution, and, accordingly, high-capacity secondary batteries are being adopted for electric vehicles. These secondary batteries are desired to have characteristics such as high density, high power, and stability.

The above information disclosed in this Background section is provided for enhancement of understanding of the background of the invention and, therefore, it may contain information that does not constitute prior art.

### SUMMARY

According to an aspect of embodiments of the present disclosure, a secondary battery is provided in which the length of a case is larger than the width, and when the internal pressure rises due to an electrode assembly, gas can be easily delivered to a safety vent through a side retainer and a bottom retainer.

According to one or more embodiments of the present disclosure, a secondary battery includes: an electrode assembly including a first electrode tab and a second electrode tab at a top portion; a first terminal electrically connected to the first electrode tab of the electrode assembly; a case accommodating the electrode assembly and a portion of the first terminal and including a safety vent at a bottom portion; a side retainer between a side of the case and a side of the electrode assembly; and a cap plate sealing a top opening of the case, wherein the side retainer includes a gas movement passage extending in a third direction, which is a longitudinal direction of the case.

The side retainer may include a side body portion that may be a rectangular plate sized to correspond to a surface of the electrode assembly, and side guide portions that may protrude from both long sides of the side body portion toward the case.

The side guide portions may extend along the third direction, which is the longitudinal direction of the case, such that the gas movement passage may be provided at an outside of the side body portion by the side guide portions.

Ends of the side guide portions may be in contact with or spaced apart from the case.

In the electrode assembly, a length in a second direction, which is a widthwise direction, may be smaller than a length in the third direction, which is the longitudinal direction.

The electrode assembly may include two long sides and two short sides, and the side retainer may be between the two short sides of the electrode assembly and the case, respectively.

A size of the side retainer may correspond to that of a short side surface of the electrode assembly.

The side retainer may be attached to both short sides of the electrode assembly, respectively, by an adhesive or a double-sided tape.

The secondary battery may further include a bottom retainer between a bottom portion of the case and a lower surface of the electrode assembly.

The bottom retainer may include: a bottom body portion that may be a rectangular plate sized to correspond to the lower surface of the electrode assembly; and a bottom guide portion that may protrude from both long sides of the bottom body portion toward the case.

The bottom body portion may include a vent hole at a position corresponding to the safety vent of the case.

The bottom guide portion may include two bottom guide portions that may extend along both long sides, and a bottom guide portion that may extend from approximately a center in a first direction, which is a widthwise direction of the bottom body portion, in a second direction, which is a longitudinal direction of the bottom body portion.

A lower end of the side retainer may be in contact with an end of the bottom retainer.

In the bottom retainer, an inner surface of the bottom body portion may be attached to the lower surface of the electrode assembly by an adhesive or a double-sided tape.

The bottom retainer may include a gas movement passage extending in a second direction, which is a longitudinal direction of the cap plate.

The secondary battery may further include a first current collector electrically connecting the first electrode tab and the first terminal.

The secondary battery may further include: a second current collector that may be in contact with and coupled to the second electrode tab of the electrode assembly; and a second terminal that may be in contact with and coupled to the second current collector on a lower side of the cap plate, and may have an upper portion penetrating the cap plate and exposed to an upper portion of the cap plate.

The first electrode tab and the second electrode tab may each include two groups spaced apart from each other in a second direction, which is a longitudinal direction of the cap plate, on an upper surface of the electrode assembly.

The safety vent may be located at a center of a second direction, which is a longitudinal direction of the bottom portion of the case.

The safety vent may include a thinner plate than other regions of the case.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

FIG. 1 is a perspective view of a secondary battery according to an embodiment of the present disclosure.
FIG. 2 is an exploded perspective view of the secondary battery of FIG. 1.
FIGS. 3A and 3B are cross-sectional views taken along the lines 3a-3a' and 3b-3b', respectively, of the secondary battery of FIG. 1.
FIGS. 4A and 4B are a perspective view and a cross-sectional view, respectively, of a side retainer shown in FIG. 2.
FIGS. 5A and 5B are a perspective view and a cross-sectional view, respectively, of a bottom retainer shown in FIG. 2.

### DETAILED DESCRIPTION

Herein, some example embodiments of the present disclosure will be described in further detail with reference to the accompanying drawings.

Examples of the present disclosure are provided to more completely explain the present disclosure to those skilled in the art; however, the following examples may be modified in various other forms within the scope of the present disclosure as set forth by the appended claims. The present disclosure may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" and/or "comprising," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections are not to be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) referring to the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would be oriented "on" or "above" the other elements or features. Thus, the example term "below" may encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

One or more embodiments of the present disclosure will now be described in further detail with reference to the attached drawings so that a person skilled in the art to which the present disclosure belongs can easily implement the present disclosure. Here, parts having similar configurations and operations are given the same reference numerals throughout the specification.

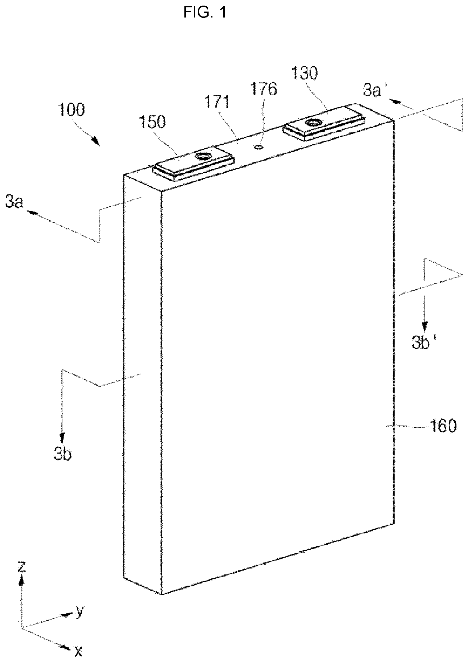

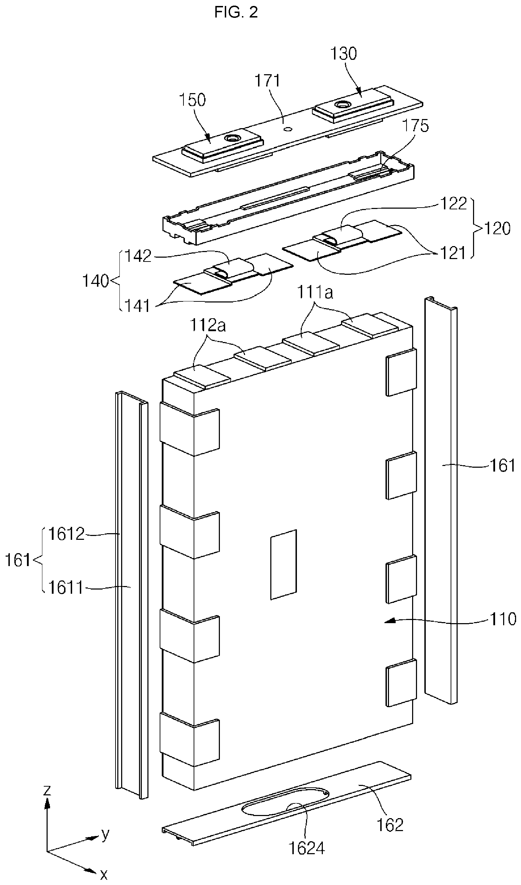

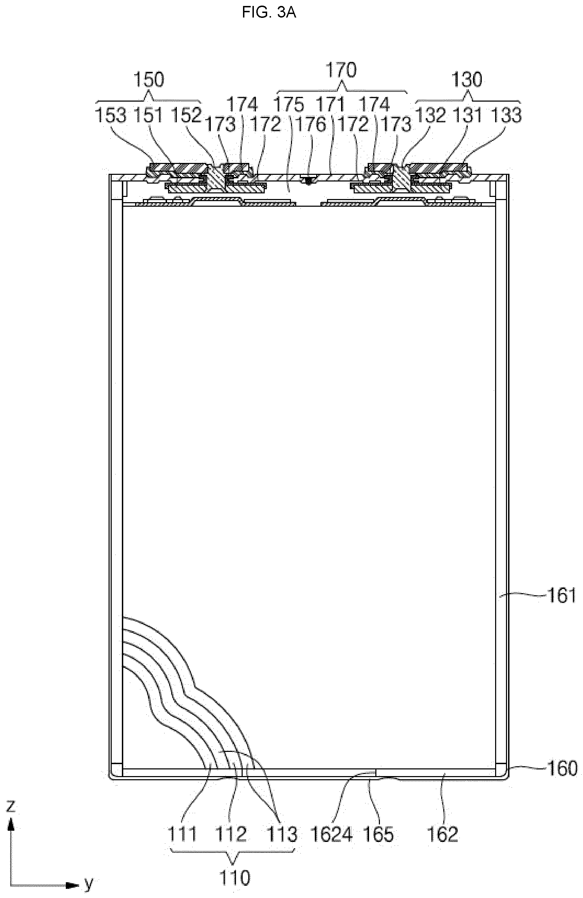

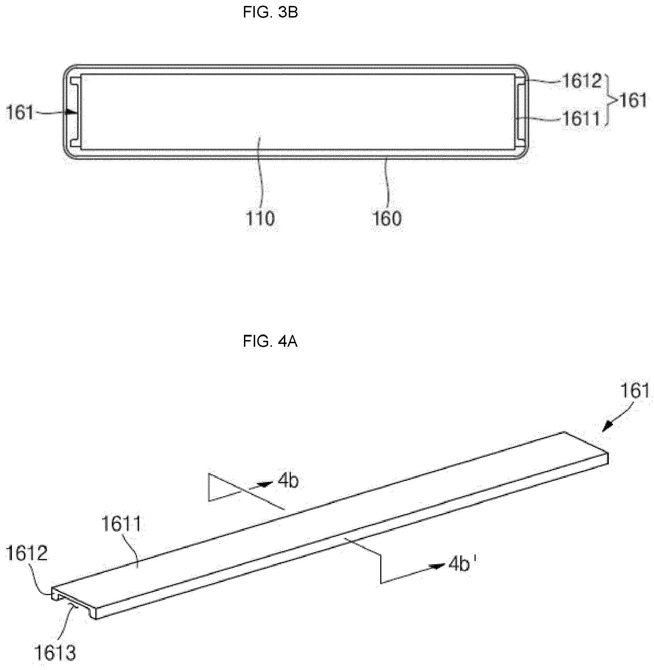

FIG. 1 is a perspective view of a secondary battery according to an embodiment of the present disclosure; FIG. 2 is an exploded perspective view of the secondary battery of FIG. 1; FIG. 3A is a cross-sectional view taken along the line 3a-3a' of the secondary battery of FIG. 1; and FIG. 3B is a cross-sectional view taken along the line 3b-3b' of the secondary battery of FIG. 1. Herein, a secondary battery 100 will be described with reference to FIGS. 1, 2, 3A, and 3B.

The secondary battery 100 may include an electrode assembly 110, a first current collector 120, a first terminal 130, a second current collector 140, a second terminal 150, a case 160, and a cap assembly 170.

The electrode assembly 110 may be of a stack type in which a first electrode plate 111, a separator 113, and a second electrode plate 112 formed in a thin plate or film shape are stacked. A length of the electrode assembly 110 in a second direction (y), which is a longitudinal direction of a cap plate 171, may be smaller than a length thereof in a third direction (z), which is a longitudinal direction of the case 160. In an embodiment, the electrode assembly 110 may be stored inside the case 160 by stacking one or more electrode assemblies 110 such that the long sides are adjacent to each other; however, the present disclosure does not limit a number of electrode assemblies 110. In an embodiment, the electrode assembly 110 may have a substantially rectangular parallelepiped shape and may have a flat bottom surface, a top surface to which electrode tabs 111a and 112a are exposed, and two long and short side surfaces connecting the top surface and the bottom surface.

In an embodiment, the first electrode plate 111 of the electrode assembly 110 may be a positive electrode, and the second electrode plate 112 may be a negative electrode. Of course, the opposite is also possible.

The first electrode plate 111 is formed by applying a first electrode active material, such as a transition metal oxide, to a first electrode current collector formed of a metal foil, such as aluminum or an aluminum alloy, and may include a first electrode tab (or a first uncoated portion) 111a, which is a region to which a first electrode active material is not applied. The first electrode tab 111a may be a path for current flow between the first electrode plate 111 and the first current collector 120. In some examples, the first electrode tab 111a may be formed by cutting the first electrode plate 111 so as to protrude from an upper end in advance when manufacturing the first electrode plate 111. In an embodiment, the first electrode tabs 111a may be positioned in two groups to be spaced apart from each other in the second direction (y), which is the longitudinal direction of the cap plate.

The second electrode plate 112 is formed by applying a second electrode active material, such as graphite or carbon, to a second electrode current collector formed of a metal foil, such as copper, a copper alloy, nickel, or a nickel alloy, and may include a second electrode tab (or second uncoated portion) 112a, which is a region to which a second electrode active material is not applied. The second electrode tab 112a may be a path for current flow between the second electrode plate 112 and the second current collector 140. In some examples, the second electrode tab 112a may be formed by cutting the second electrode plate 112 so as to protrude from an upper end in advance when manufacturing the second electrode plate 112. In an embodiment, the second electrode tabs 112a may be positioned in two groups to be spaced apart from each other in the second direction (y), which is the longitudinal direction of the cap plate.

The first electrode tab 111a and the second electrode tab 112a may be positioned to be spaced apart from each other in the second direction (y), which is the longitudinal direction of the cap plate. For example, referring to FIG. 2, the first electrode tabs 111a may be located in two groups on the right side of the center in the second direction (y), and the second electrode tabs 112a may be located in two groups on the left side. Of course, when the secondary battery 100 rotates left and right or up and down, the position thereof may change. Herein, for convenience of explanation, the following description will be made on the basis of the secondary battery 100 shown in FIGS. 1 and 2.

In some examples, the separator 113 is located between the first electrode plate 111 and the second electrode plate 112 to prevent or substantially prevent a short circuit and enable the movement of lithium ions, and may include polyethylene, polypropylene, or a composite film of ethylene and polypropylene. In an embodiment, the separator 113 may be replaced with an inorganic solid electrolyte, such as a sulfide-based, oxide-based, or phosphate-based electrolyte that does not require a liquid or gel electrolyte. In some examples, the electrode assembly 110 may be accommodated in the case 160 along with an electrolyte solution. In some examples, the electrolyte solution may include a lithium salt, such as LiPF₆ or LiBF₄ in an organic solvent, such as EC, PC, DEC, EMC, or DMC. In an embodiment, the electrolyte solution may be liquid or gel. In some examples, when an inorganic solid electrolyte is used, the electrolyte solution may be omitted.

In an embodiment, in the electrode assembly 110, the first current collector 120 and the second current collector 140 may be welded and connected to the first electrode tab 111a and the second electrode tab 112a, respectively, exposed at the upper end.

The first current collector 120 may include a plate-shaped first tab connection part 121 in contact with the first electrode tab 111a, and a first terminal connection part 122 protruding generally upward from a center of the first tab connection part 121. In an embodiment, the first current collector 120 may be made of a metal, for example, aluminum or an aluminum alloy.

In an embodiment, the first terminal connection part 122 may be coupled to the lower surface of the first terminal 130 by contacting and welding. The first tab connection part 121 is shaped of a plate extending in the second direction (y), and has a first end and a second end respectively coupled to the groups of the first electrode tabs 111a by welding. In an embodiment, the center of the first tab connection part 121 may protrude upward compared to both ends connected to the first electrode tab 111a.

In an embodiment, the lower end of the first terminal connection part 122 may be in contact with and be coupled to the upper surface of the center of the first tab connection part 121, and the upper end thereof may be in contact with and be coupled to the lower surface of the first terminal 130 by welding. The first terminal connection part 122 may be shaped of a plate extending along a first direction (x) and may include a bent portion that is bent at least once between the lower end and the upper end.

In an embodiment, the first terminal 130 is made of metal and may be electrically connected to the first terminal connection part 122 of the first current collector 120 by contacting and welding. The first terminal 130 may be located on a side of the second direction (y), which is the longitudinal direction of the cap plate 171.

In some examples, the first terminal 130 may include a first inner terminal plate 131, a first terminal pillar 132, and a first outer terminal plate 133. In an embodiment, the first terminal 130 may be made of a same metal as the first current collector 120.

The first inner terminal plate 131 may be located inside the cap plate 171, and the first outer terminal plate 133 may be located outside the cap plate 171. In an embodiment, the first terminal pillar 132 penetrates the cap plate 171, and is coupled to the first outer terminal plate 133 on the outside of the cap plate 171 and to the first inner terminal plate 131 on the inside of the cap plate 171.

In an embodiment, an inner insulation member 172 may be further interposed between the first inner terminal plate 131 and the cap plate 171, and an outer insulation member 174 may be further interposed between the first outer terminal plate 133 and the cap plate 171. In addition, a seal gasket 173 may be further interposed between the first terminal pillar 132 and the cap plate 171 to seal a space between the first terminal 130 and the cap plate 171.

A lower surface of the first inner terminal plate 131 may be in contact with and be coupled to the first terminal connection part 122 of the first current collector 120. The first inner terminal plate 131 may have a terminal hole penetrating between the upper and lower surfaces. The terminal hole may be formed to correspond to the diameter of the first terminal pillar 132. The terminal hole may be located approximately at a center of the first inner terminal plate 131.

The first terminal pillar 132 may be inserted and combined into the terminal hole of the first inner terminal plate 131. For example, the first terminal pillar 132 may be inserted into the terminal hole of the first inner terminal plate 131 and fixed at the bottom surface by riveting and/or welding. The first terminal connection part 122 of the first current collector 120 may be coupled to the lower surface of the first inner terminal plate 131 coupled to the first terminal pillar 132 by welding.

The first terminal pillar 132 has a pillar shape and may penetrate the cap plate 171. Additionally, the first terminal pillar 132 may include a flange on the outside of the cap plate 171 to prevent or substantially prevent the first terminal pillar 132 from falling off the cap plate 171. In an embodiment, the first terminal pillar 132 may be inserted into and coupled to the terminal hole of the first outer terminal plate 133 from the outside and may be inserted into and coupled, by riveting, to the terminal hole of the first inner terminal plate 131 from the inside, with respect to the cap plate 171. The flange may be located between the first outer terminal plate 133 and the cap plate 171.

The first outer terminal plate 133 may have a terminal hole penetrating between the upper and lower surfaces. The terminal hole may be located approximately at a center of the first outer terminal plate 133.

The first terminal pillar 132 may be inserted and coupled to the terminal hole of the first outer terminal plate 133. For example, the first terminal pillar 132 may be inserted into the terminal hole of the first outer terminal plate 133 on the outside of the cap plate 171 and fixed by riveting and/or welding. In an embodiment, an outer insulation member 174 made of an insulating material may be further interposed between the lower surface of the first outer terminal plate 133 and the cap plate 171 for insulation.

In an embodiment, the first terminal 130, which includes the first inner terminal plate 131, the first terminal pillar 132, and the first outer terminal plate 133, may be made of a metal, for example, aluminum or an aluminum alloy. In the first terminal 130, portions of the first outer terminal plate 133 and the first terminal pillar 132 may be exposed and protrude from the outside of the cap plate 171. The first terminal 130 may have a portion of the first terminal pillar 132 and the first inner terminal plate 131 located inside the case 160, which is inside the cap plate 171. In addition, the first terminal 130 may be electrically connected to the first current collector 120 inside the case 160.

In an embodiment, the second current collector 140 is made of metal and may electrically connect the second electrode plate 112 and the second terminal 150. In an embodiment, the second current collector 140 is a metal plate and may include a second electrode connection part 141 that is contact with and is coupled to the second electrode tab of the second electrode plate 112, and a second terminal connection part 142 that is contact with and is coupled to the second terminal 150. In addition, the second current collector 140 may be coupled to the electrode assembly 110 and the second terminal 150 in a similar form to the first current collector 120. In an embodiment, the second current collector 140 may be made of copper or a copper alloy.

In an embodiment, the second terminal 150 is made of metal and may be electrically connected to the second current collector 140. Of course, the second terminal 150 may be located on another side of the second direction (y), which is the longitudinal direction of the cap plate 171. The first terminal 130 and the second terminal 150 may be spaced apart from each other in the second direction (y) on the cap plate 171. In some examples, the second terminal 150 may include a second inner terminal plate 151, a second terminal pillar 152, and a second outer terminal plate 153.

Here, the second inner terminal plate 151 may be located inside the cap plate 171, and the second outer terminal plate 153 may be located outside the cap plate 171. In an embodiment, an inner insulation member 172 may be further interposed between the second outer terminal plate 153 and the cap plate 171. In an embodiment, a seal gasket 173 may be further interposed between the second terminal pillar 152 and the cap plate 171 and between the second inner terminal plate 151 and the cap plate 171. In addition, the second terminal pillar 152 penetrates the cap plate 171, and is coupled to the second outer terminal plate 153 on the outside of the cap plate 171 and to the second inner terminal plate 151 on the inside of the cap plate 171.

The second terminal 150 may be similar in shape and structure to the first terminal 130. In an embodiment, the second terminal 150 may be coupled to the electrode assembly 110 through the second current collector 140 so as to be symmetrical to the first terminal 130 about the second direction (y) of the cap plate 171. In an embodiment, in the second terminal 150, the first inner terminal plate 151 and the second terminal pillar 152 are made of copper or a copper alloy, and the second outer terminal plate 153 may be made of a metal, for example, aluminum or an aluminum alloy.

In an embodiment, the case 160 may be shaped of a hollow rectangular parallelepiped having an opening formed at a top portion. Through the opening of the case 160, the electrode assembly 110 may be inserted into the case 160. The length of the case 160 in the third direction (z), which is the longitudinal direction of the case 160, may be greater than the length of the cap plate 171 in the second direction (y), which is the longitudinal direction of the cap plate 171.

In an embodiment, the case 160 may include a rectangular bottom portion and four side walls extending upward from the four sides of the bottom portion. Here, the side walls of the case 160 may include short side walls extending in the first direction (x), which is the widthwise direction of the cap plate 171, and long side walls extending in the second direction (y). In an embodiment, the bottom portion and the side walls of the case 160 may be formed as one piece.

The case 160 may include a vent hole penetrating between the upper and lower surfaces approximately at the center of the bottom portion. In addition, a safety vent 165 may be installed in the vent hole. The safety vent 165 may be a plate that is thinner than the case 160. In an embodiment, the safety vent 165 is thinner than other regions and may include a notch that can be opened at a set pressure.

The case 160 may further include retainers 161 and 162 to facilitate gas movement within the case 160. The retainers 161 and 162 may include two side retainers 161 interposed between the electrode assembly 110 and the short side wall of the case 160 and a bottom retainer 162 interposed between the electrode assembly 110 and the bottom portion of the case 160. In an embodiment, the retainers 161 and 162 may be made of a polymer material, such as polypropylene (PP) or polyphenylene sulfide (PPS).

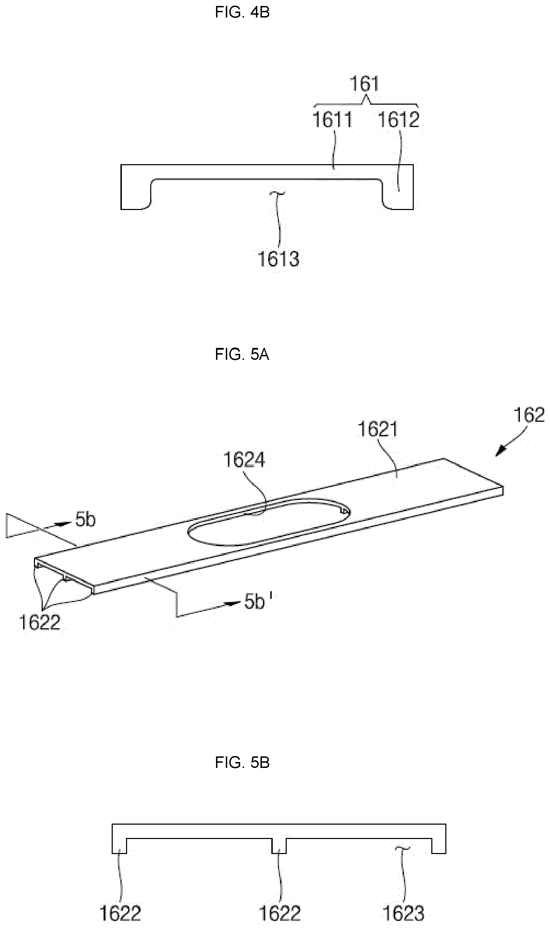

FIGS. 4A and 4B are a perspective view and a cross-sectional view taken along the line 4b-4b' of FIG. 4A, respectively, of a side retainer shown in FIG. 2; and FIGS. 5A and 5B are a perspective view and a cross-sectional view taken along the line 5b-5b' of FIG. 5A, respectively, of a bottom retainer shown in FIG. 2. Herein, the side retainer 161 and the bottom retainer 162 will be described with reference to FIGS. 4A, 4B, 5A, and 5B.

The side retainer 161 may include a side body portion 1611 having a flat rectangular plate shape and side guide portions 1612 protruding from both long sides of the side body portion 1611 toward the case 160. In an embodiment, an inner surface of the side body portion 1611 may be attached to a short side of the electrode assembly 110 by using an adhesive or a double-sided tape. In an embodiment, the double-sided tape may be a polyester film coated with an acrylic adhesive, or the adhesive may be a urethane adhesive.

A length of the side body portion 1611 in the first direction (x) may correspond to a width of the short side of the electrode assembly, and a length in the third direction (z) may correspond to a length of the electrode assembly 110. A size of the side retainer 161 may correspond to that of a short side surface of the electrode assembly 110.

The side guide portions 1612 may extend along the third direction (z). The side guide portions 1612 extend along both long sides of the side body portion 1611, and ends thereof may be in contact with or spaced apart from the case 160. The side retainer 161 may include a gas movement passage 1613, which is a separation space, between the side body portion 1611 and the case 160 by the side guide portions 1612. In an embodiment, in the side retainer 161, the inner surface of the side body portion 1611 may be adhered and fixed to the short side surface of the electrode assembly 110.

The side retainer 161 may provide the gas movement passage 1613 between the electrode assembly 110 and the short side wall of the case 160. A lower end of the side retainer 161 may be in contact with both ends of the bottom retainer 162 in the second direction (y). In an embodiment, two side retainers 161 may be provided to be symmetrical to each other in the second direction (y) about the electrode assembly 110.

The bottom retainer 162 may be interposed between the electrode assembly 110 and the bottom of the case 160. The bottom retainer 162 may include a flat plate-shaped bottom body portion 1621 and a bottom guide portion 1622 protruding from both long sides of the bottom body portion 1621 toward the case 160. The bottom retainer 162 may include a vent hole 1624 corresponding to the vent hole of the case 160 at approximately a center thereof. Here, the vent hole 1624 of the bottom retainer 162 may allow pressure to be transmitted to the vent hole of the case 160 when the internal pressure increases by the electrode assembly 110.

In an embodiment, the bottom retainer 162 may be attached to the inner surface of the bottom body portion 1621 to the bottom surface of the electrode assembly 110 by using an adhesive or a double-sided tape. In the bottom body portion 1621, the length in the second direction (y) corresponds to the length of the bottom surface of the electrode assembly 110, and the length in the first direction (x) corresponds to the width of the bottom surface of the electrode assembly 110. A size of the bottom retainer 162 may correspond to that of the bottom surface of the electrode assembly 110.

The bottom guide portion 1622 may extend along the second direction (y). In an embodiment, the bottom guide portion 1622 extends along both long sides of the bottom body portion 1621, and the ends thereof may be in contact with or spaced apart from the bottom of the case 160. In an embodiment, the bottom guide portion 1622 may extend in the second direction (y) along approximately the center of the first direction (x), which is the widthwise direction of the bottom body portion 1621. In an embodiment, three bottom guide portions 1622 may be provided on the outer surface of the bottom body portion 1621 to be spaced apart from each other along the second direction (y). By this bottom guide portion 1622, the bottom retainer 162 may be provided with a gas movement passage 1623 between the bottom body portion 1621 and the case 160. Additionally, the bottom guide portion 1622 may support the electrode assembly 110 located on the upper side of the bottom retainer 162.

In an embodiment, both ends of the bottom retainer 162 may be in contact with the lower surface of the side retainer 161. The bottom retainer 162 may have gas movement passages 1623 located on both sides of the vent hole 1624 in the second direction (y). The bottom retainer 162 may easily deliver the gas delivered through the gas movement passage 1613 of the side retainer 161 to the center of the case 160 where the safety vent 165 is located, through the gas movement passage 1623.

That is, when the internal pressure of the secondary battery 100 rises due to the electrode assembly 110, the gas present between the cap plate 171 and the electrode assembly 110 may also be easily delivered to the safety vent 165 through the gas movement passages 1613 and 1623 provided in the side retainer 161 and the bottom retainer 162.

The cap assembly 170 may be coupled to the top opening of the case 160. In some examples, the cap assembly 170 may include a cap plate 171, an inner insulation member 172, a seal gasket 173, an outer insulation member 174, an insulation member 175, and a plug 176.

In an embodiment, the cap plate 171 has a flat rectangular plate shape and can seal the top opening of the case 160. The cap plate 171 may have terminal holes on both sides penetrating between the outer surface and the inner surface and an electrolyte injection port. The first terminal pillar 132 of the first terminal 130 may penetrate the terminal hole on the right side of the cap plate 171 and be coupled to the first inner terminal plate 131 and the first outer terminal plate 133. In addition, the second terminal pillar 152 of the second terminal 150 may penetrate the terminal hole on the left side of the cap plate 171 and be coupled to the second inner terminal plate 151 and the outer terminal plate 153.

In addition, the electrolyte injection port may be sealed by the plug 176 after the cap plate 171 is coupled to the case 160 and the electrolyte solution is injected into the case 160.

The inner insulation member 172 may be interposed between the inner surface of the cap plate 171 and the first inner terminal plate 131 and the second inner terminal plate 151, respectively. The inner insulation member 172 may be in close contact with the inner surface of the cap plate 171 and may also be in close contact with the seal gasket 173. The inner insulation member 172 may be made of an insulating material and may insulate the cap plate 171 and the inner terminal plate 131 from each other and may insulate the cap plate 171 and the second inner terminal plate 151 from each other.

In an embodiment, the seal gasket 173 is made of an insulating material and is provided between the cap plate 171 and the first terminal pillar 132 and between the cap plate 171 and the second terminal pillar 152, respectively, to seal a space between the cap plate 171 and the first terminal pillar 132 and between the cap plate 171 and the second terminal pillar 152, respectively.

That is, the seal gasket 173 may be interposed between the cap plate 171 and the first terminal pillar 132 and between the cap plate 171 and the second terminal pillar 152, respectively. The seal gasket 173 may prevent or substantially prevent external moisture from penetrating into the interior of the secondary battery 100 and/or prevent or substantially prevent the electrolyte contained within the secondary battery 100 from leaking out. A side of the seal gasket 173 may be in contact with the outer insulation member 174, and another side thereof may be in contact with the inner insulation member 172.

In addition, the outer insulation member 174 may be interposed between the outer surface of the cap plate 171 and the first outer terminal plate 133, and between the outer surface of the cap plate 171 and the second outer terminal plate 153, respectively. The outer insulation member 174 may be in close contact with the cap plate 171, and may also be in close contact with the first terminal pillar 132 and the second terminal pillar 152, respectively.

That is, the cap plate 171 may be electrically separated from the first terminal 130 and the second terminal 150 by the inner insulation member 172, the seal gasket 173, and the outer insulation member 174.

In an embodiment, the insulation member 175 may be interposed between the cap plate 171 and the electrode assembly 110. The insulation member 175 may be made of an insulating material. The insulation member 175 may prevent or substantially prevent the upper part of the electrode assembly 110 from electrically contacting the cap plate 171. The insulation member 175 may prevent or substantially prevent the electrode assembly 110 from moving in the third direction (z) inside the case 160.

In the above-described secondary battery 100 that is a secondary battery in which the length of the case 160 is greater than the width of the case 160, when the internal pressure of the case 160 rises due to the electrode assembly 110, the gas present between the cap plate 171 and the electrode assembly 110 may also be easily delivered toward the safety vent 165 through the gas movement passages 1613 and 1623 provided in the side retainer 161 and the bottom retainer 162.

As described above, in the secondary battery according to one or more embodiments of the present disclosure, the length of the case is larger than the width, and when the internal pressure rises due to an electrode assembly, gas can be easily delivered to a safety vent through a side retainer and a bottom retainer.

Further, in the secondary battery according to one or more embodiments of the present disclosure, the length of a case is larger than the width, and when the internal pressure rises due to an electrode assembly, gas present between the cap plate and the electrode assembly may be easily delivered to a safety vent located at a bottom portion of a case through a gas movement passage provided in a side retainer and a bottom retainer.

While the foregoing embodiments are some example embodiments for carrying out the secondary battery according to the present disclosure; the present disclosure is not limited to these embodiments, and it will be understood by a person skilled in the art that various changes in form and details may be made therein without departing from the scope of the present disclosure as set forth by the appended claims.

## Claims

1. A secondary battery (100) comprising:
an electrode assembly (110) comprising a first electrode tab (111a) and a second electrode tab (112a) at a top portion;
a first terminal (130) electrically connected to the first electrode tab (111a) of the electrode assembly (110);
a case (160) accommodating the electrode assembly (110) and a portion of the first terminal (130) and comprising a safety vent (165) at a bottom portion;
a side retainer (161) between a side of the case (160) and a side of the electrode assembly (110); and
a cap plate (171) sealing a top opening of the case (160),
wherein the side retainer (161) comprises a gas movement passage (1613, 1623) extending in a third direction (z), which is a longitudinal direction of the case (160).

2. The secondary battery (100) as claimed in claim 1, wherein the side retainer (161) comprises:
a side body portion (1611) that is a rectangular plate sized to correspond to a surface of the electrode assembly (110); and
side guide portions (1612) protruding from both long sides of the side body portion (1611) toward the case (160).

3. The secondary battery (100) as claimed in claim 2,
wherein the side guide portions (1612) extend along the third direction (z), which is the longitudinal direction of the case (160), such that the gas movement passage (1613, 1623) is provided at an outside of the side body portion (1611) by the side guide portions (1612); and/or
wherein ends of the side guide portions (1612) are in contact with or spaced apart from the case (160).

4. The secondary battery (100) as claimed in any one of the preceding claims, wherein, in the electrode assembly (110), a length in a second direction (y), which is a widthwise direction, is smaller than a length in the third direction (z), which is the longitudinal direction.

5. The secondary battery (100) as claimed in any one of the preceding claims,
wherein the electrode assembly (110) comprises two long sides and two short sides, and the side retainer (161) is between the two short sides of the electrode assembly (110) and the case (160); and/or
wherein a size of the side retainer (161) corresponds to that of a short side surface of the electrode assembly (110).

6. The secondary battery (100) as claimed in claim 5, wherein the side retainer (161) is attached to both short sides of the electrode assembly (110) by an adhesive or a double-sided tape.

7. The secondary battery (100) as claimed in any one of the preceding claims, further comprising a bottom retainer (162) between a bottom portion of the case (160) and a lower surface of the electrode assembly (110).

8. The secondary battery (100) as claimed in claim 7, wherein the bottom retainer (162) comprises:
a bottom body portion (1621) that is a rectangular plate sized to correspond to the lower surface of the electrode assembly (110); and
a bottom guide portion (1622) that protrudes from both long sides of the bottom body portion (1621) toward the case (160).

9. The secondary battery (100) as claimed in claim 8,
wherein the bottom body portion (1621) comprises a vent hole (1624) at a position corresponding to the safety vent (165) of the case (160); and/or

10. The secondary battery (100) as claimed in claim 8 or 9, wherein the bottom guide portion (1622) comprises:
two bottom guide portions (1622) extending along both long sides; and
another bottom guide portion (1622) extending from approximately a center in a first direction (x), which is a widthwise direction of the bottom body portion (1621), in a second direction (y), which is a longitudinal direction of the bottom body portion (1621).

11. The secondary battery (100) as claimed in any one of claims 8 to 10,
wherein a lower end of the side retainer (161) is in contact with an end of the bottom retainer (162); and/or
wherein an inner surface of the bottom body portion (1621) is attached to the lower surface of the electrode assembly (110) by an adhesive or a double-sided tape.

12. The secondary battery (100) as claimed in any one of claims 7 to 11, wherein the bottom retainer (162) comprises a gas movement passage (1613, 1623) extending in a second direction (y), which is a longitudinal direction of the cap plate (171).

13. The secondary battery (100) as claimed in any one of the preceding claims, further comprising:
a first current collector (120) electrically connecting the first electrode tab (1111a) and the first terminal (130); and/or
a second current collector (140) that is in contact with and is coupled to the second electrode tab (112a) of the electrode assembly (110), and
a second terminal (150) that is in contact with and is coupled to the second current collector (140) on a lower side of the cap plate (171), and comprises an upper portion penetrating the cap plate (171) and exposed to an upper portion of the cap plate (171).

14. The secondary battery (100) as claimed in any one of the preceding claims, wherein the first electrode tab (111a) and the second electrode tab (112a) each comprise two groups spaced apart from each other in a second direction (y), which is a longitudinal direction of the cap plate (171), on an upper surface of the electrode assembly (110).

15. The secondary battery (100) as claimed in any one of the preceding claims,
wherein the safety vent (165) is located at a center of a second direction (y), which is a longitudinal direction of a bottom portion of the case (160); and/or
wherein the safety vent (165) comprises a thinner plate than other regions of the case (160).
